# EUROPEAN PATENT SPECIFICATION

(11) **EP 3 705 361 B1**
(45) Date of publication and mention of the grant of the patent: **13.11.2024**
(21) Application number: 18874013.8
(22) Date of filing: 06.02.2018
(51) Int. Cl.: B60S 5/06, B60L 53/80, B60L 53/35

(54) **BATTERY SWAPPING TRANSPORTING DEVICE**
BATTERIEWECHSELTRANSPORTVORRICHTUNG
DISPOSITIF DE TRANSPORT DE REMPLACEMENT DE BATTERIE

(30) Priority: 30.10.2017 CN 201711031631
(43) Date of publication of application: 09.09.2020
(73) Proprietor: NIO (Anhui) Holding Co., Ltd., Hefei City, Anhui Province (CN)
(72) Inventor: TIAN, Xiaotao, Anting, Jiading Shanghai (CN); DING, Xikun, Anting, Jiading Shanghai (CN); BENGTSSON, Jan, Anting, Jiading Shanghai (CN); LI, Nan, Anting, Jiading Shanghai (CN)
(74) Representative: Vossius & Partner Patentanwälte Rechtsanwälte mbB
(86) International application number: PCT/CN2018/075461
(87) International publication number: WO 2019/085319

(56) References cited:
- CN-A- 104 259 830
- CN-A- 105 151 015
- CN-A- 106 347 323
- CN-A- 107 097 762
- CN-U- 202 089 041
- CN-U- 204 688 081
- CN-U- 205 075 813
- CN-U- 205 872 015
- GB-A- 2 050 310
- KR-A- 20130 041 476
- US-A1- 2016 107 619

## Description

### Technical Field

The invention relates to the field of battery loading and unloading, and in particular to a battery swap transporter for battery replacement for an electric vehicle.

### Background Art

With the supply pressure and exhaust pollution caused by the consumption of traditional fossil energy, the development of traditional fuel vehicles has come to a lag period. In this regard, with the good prospects of green energy resources, energy-saving and environmentally friendly electric vehicles have been booming in recent years. At present, in the development of electric vehicles, due to the limitation of the current battery technology, the problems of insufficient battery capacity and long charging time are inevitable at present. In order to solve such technical problems, not only has investment in research and development of the battery technology itself been increased, but the development of the battery peripheral technology has also been increased. For example, battery replacement is a fast, convenient, and safe solution.

Specifically, battery swap, i.e. battery replacement, refers to an energy supplement approach in which a battery swap apparatus is used to remove a traction battery from an electric vehicle and load another traction battery onto the electric vehicle. A battery swap station is a place for battery swap of traction batteries for electric vehicles, and has the functions of charging, thermal management, communication, monitoring, etc. A certain number of battery boxes can be loaded in advance in the battery swap station, and a special charging cable is used in a battery compartment for rapid connection to a charging device for charging.

For an electric vehicle of a battery swap type, a battery thereof is generally fixed to the bottom of a vehicle body by bolts, and the battery has a certain weight, such that during the battery unloading, an auxiliary mechanical device is needed to support the weight of the battery, and the battery needs to be detached from the vehicle body after the bolts are removed and carried away for exchange of a new battery, and during the battery loading, the battery needs to be lifted to the bottom of the vehicle body. In order to satisfy the aforementioned requirements, there is a need for a battery transfer apparatus that can implement elevation, transfer, and exchange.

An existing battery transfer apparatus comprises an AGV trolley used in a production line of electric vehicles, the AGV trolley comprising an electric walking system, a scissor lifting platform, and a manual floating unloading device. The manual floating unloading device consists of a universal ball, a linear-guide-rail type floating mechanism, a vehicle body pin positioning mechanism, and a battery conveying guiding mechanism. With the aid of the apparatus, two workers can cooperate to load and unload a battery. However, both the AGV walking trolley and a vehicle-lifting crane in the system are large in size, and guide rails and a safety protection system need to be constructed indoors, so that the system has the disadvantages of excessively high costs, large space, high site requirement, restricted distribution, etc. Therefore, an urgent technical problem to be solved is how to provide a battery transfer apparatus that is small in occupied space, has a simple structure, and can still complete the actions required for loading and unloading a battery.

US 2016/107619 A1 relates to a battery pack lift system which includes: a frame having nutrunners mounted thereon according to a battery pack fastener pattern for a vehicle; a lift configured to raise and lower the frame with regard to the vehicle; a first air bearing positioned between the frame and the lift, the first air bearing configured to allow relative movement between the frame and the lift; and a second air bearing positioned on the frame, the second air bearing configured to allow relative movement between a battery pack and the frame.

### Summary of the Invention

An object of the invention is to provide a battery swap transporter. The invention is defined by independent claim 1. Further embodiments of the invention are defined by the dependent claims.

In order to achieve the object of the invention, according to one aspect of the invention, a battery swap transporter is provided, which comprises: a bearing portion, comprising: a bearing plate used for bearing a battery to be transported, with a battery conveying mechanism being provided on the bearing plate; and an elevation mechanism, which is supported at the bottom of the bearing plate and is controlled to ascend or descend to change a vertical distance between the bearing plate and a bottom plate; a moving portion, which is connected to the bottom of the bearing portion and is used for driving the bearing portion to move; and a vehicle body positioning mechanism arranged on the bearing plate, wherein the vehicle body positioning mechanism is used for limiting the bearing plate to a first desired position fitted to a bottom positioning hole of a vehicle with a battery to be swapped.

Optionally, the vehicle body positioning mechanism is longitudinally arranged at an end of the bearing plate, and the vehicle body positioning mechanism has a working state and an avoidance state; in the working state, the vehicle body positioning mechanism can be used for limiting the position between the bearing plate and the vehicle with a battery to be swapped; and in the avoidance state, the battery to be transported leaves or enters the bearing plate along the end of the bearing plate.

According to the invention, the battery swap transporter further comprises: a floating mechanism arranged between the bearing plate and the elevation mechanism in an elevation direction, wherein the bottom of the floating mechanism being connected to the elevation mechanism; and the floating mechanism is used to enable the bearing plate to shift relative to the elevation mechanism in a horizontal direction and/or in a vertical direction.

Optionally, a battery positioning mechanism is provided on the bearing plate, and the battery positioning mechanism is used for limiting the bearing plate to a second desired position for locking or unlocking the battery to be transported.

Optionally, the battery conveying mechanism comprises conveying rollers arranged on two sides and/or in the middle of the bearing plate.

Optionally, the battery swap transporter further comprises battery guiding mechanisms respectively provided on two sides of the bearing plate, wherein the battery guiding mechanisms are used for limiting a partial moving boundary and a moving direction of the battery to be transported.

Optionally, the battery guiding mechanism comprises a guide roller.

Optionally, the moving portion further comprises a brake element, which is controlled to limit the movement of the moving portion.

Optionally, the battery swap transporter further comprises a braking floor lock, which is arranged at the underside of the bottom plate and is controlled to limit the movement of the battery swap transporter.

Optionally, the battery swap transporter further comprises a positioning end plate longitudinally arranged at the end of the bearing plate, wherein the positioning end plate is arranged at the same end of the bearing plate as the vehicle body positioning mechanism, and extends beyond both sides of the end of the bearing portion, and the positioning end plate is provided with a positioning hole.

In the battery swap transporter according to this concept, functions such as elevation and transfer required for battery loading and unloading are all integrated in the bearing portion, and by means of providing the vehicle body positioning mechanism, the battery swap transporter and the vehicle with a battery to be swapped can be accurately positioned relative to each other during the battery loading and unloading, thereby improving the battery replacement efficiency. The battery swap transporter can be manually pushed, has a large elevation travel, is large in bearing capacity and small in size, is easy and convenient to operate, is applicable to various parking lots and most automobile maintenance stations, and is also simple and reliable in structure and use.

### Brief Description of the Drawings

Fig. 1 is a schematic diagram of one embodiment of a battery swap transporter of the invention.
Fig. 2 is a front view of the battery swap transporter in Fig. 1.
Fig. 3 is a schematic diagram of the battery swap transporter in Fig. 1 bearing a battery to be transported.
Fig. 4 is a side view of the battery swap transporter in Fig. 3 bearing the battery to be transported.
Fig. 5 is a schematic diagram showing the application of the battery swap transporter of the invention in a battery swap station system.

### Detailed Description of Embodiments

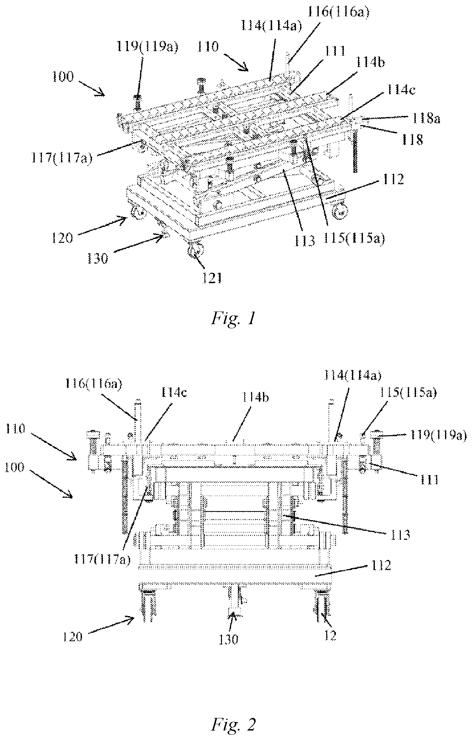

According to the invention, an embodiment of a battery swap transporter is provided here with reference to the accompanying drawings. Referring to Figs. 1 and 2, the battery swap transporter 100 comprises a bearing portion 110 and a moving portion 120, wherein the bearing portion 110 is used to implement the functions of conveying and elevation during the loading and unloading of a battery, and the moving portion 120 is used to implement walking of the battery swap transporter 100.

Specifically, the bearing portion 110 comprises: a bearing plate 111 used for bearing a battery to be transported, with a battery conveying mechanism 114 being provided on the bearing plate 111; a bottom plate 112 providing an installation position for the moving portion 120; and an elevation mechanism 113 supported between the bearing plate 111 and the bottom plate 112, the elevation mechanism 113 being able to be controlled to ascend and descend to change a vertical distance between the bearing plate 111 and the bottom plate 112. The moving portion 120 is connected to the bottom plate 112 of the bearing portion 110 and can drive the bearing portion 110 to move. In the battery swap transporter 100 with such arrangement, the functions such as elevation and conveying required for the loading and unloading of a battery are integrated in the bearing portion, and in cooperation with the moving portion, the battery transfer after the loading and unloading is implemented, so that the entire battery swap process can be completely implemented. Furthermore, the bearing portion 110 is designed to have a size matching, in a vertical direction, the battery to be transported. Therefore, on the premise that the functions of loading, unloading and transfer of a battery are achieved, the space occupied by the device is minimized. As a whole, the battery swap transporter can be manually pushed, has a large elevation travel, is large in bearing capacity and small in size, is easy and convenient to operate, is applicable to various parking lots and most automobile maintenance stations, and is also simple and reliable in structure and use.

In addition, in order to ensure more efficient and reliable loading and unloading of a battery, various detail modifications could be further made to the bearing portion 110 of the battery swap transporter, as will be described below one by one.

For example, the bearing plate 111 may be provided with an additional vehicle body positioning mechanism 116, such as a vehicle body positioning pin 116a. During the loading and unloading of a battery, the vehicle body positioning pin 116a is firstly aligned to a mating positioning hole in the bottom of the vehicle with a battery to be swapped, so that the bearing plate 111 is limited to a first desired position at the bottom of the vehicle with a battery to be swapped. In this case, the battery to be loaded and unloaded can be accurately placed on the bearing plate after being unloaded, or can be accurately loaded in a vehicle battery installation position via the bearing plate. More specifically, the vehicle body positioning pin 116a may be arranged at one end of the bearing plate 111 in a longitudinal direction of the battery swap transporter 100. In this case, the vehicle body positioning pin may further have a function of longitudinal position limitation for the battery on the bearing plate during transfer so as to prevent the battery from falling off, and after a transfer destination is reached, the vehicle body positioning pin 116a is pulled down so as to be in an avoidance state, and then, the battery can be conveyed to a storage point in this direction, or a new battery can be transferred to the battery swap transporter from the storage point.

According to the invention, a floating mechanism 117 is further additionally provided at the underside of the bearing plate 111 and connected to the elevation mechanism 113. The floating mechanism 117 is used to enable the bearing plate 111 to shift relative to the elevation mechanism 113 in a horizontal direction and/or in a vertical direction. Specifically, when there is a large distance between the vehicle body positioning mechanism 116 and the mating positioning hole in the bottom of the vehicle, the battery swap transporter 110 may be driven by the moving portion to adjust the position; and when there is only slight deviation between the vehicle body positioning mechanism 116 and the mating positioning hole in the bottom of the vehicle, the relative position between the bearing plate 111 and the vehicle can be finely adjusted by the floating mechanism 117, so that the vehicle body positioning mechanism 116 is adjusted to adapt to the position of the mating vehicle body positioning hole.

According to the invention, the floating mechanism 117 is a chain-suspended floating element. In this case, the chain-suspended floating element comprises a chain that enables the bearing plate 111 to shift relative to the elevation mechanism 113 in a horizontal direction, and a spring that enables the bearing plate 111 to shift relative to the elevation mechanism 113 in a vertical direction. Specifically, the bearing plate 111 and the elevation mechanism 113 are respectively provided with a plurality of connecting parts in pairs used for connection with each other, the connecting parts on the bearing plate 111 are lower than the connecting parts on the elevation mechanism 113 in the elevation direction, and the connecting parts are connected through the two ends of the chain. When the bearing plate and the elevation mechanism need to shift horizontally, the chain can swing in the horizontal direction. Further, one of the connection parts may be connected to a corresponding end of the chain by means of the spring, so that when the bearing plate and the elevation mechanism need to shift vertically, the spring can be compressed in the vertical direction.

In addition, the bearing plate 111 is further provided with a battery positioning mechanism 115, such as a battery positioning pin 115a. Specifically, during the loading and unloading of a battery, after the vehicle body positioning pin 116a and the bottom of the vehicle with a battery to be swapped are mated and positioned, a battery to be loaded and unloaded can be accurately placed on the bearing plate after being unloaded, and then, by means of the battery positioning pins 115a on the bearing plate 111, the battery to be transported can be limited to the second desired position on the bearing plate 111. Alternatively, when a new battery is transferred to the vehicle with a battery to be swapped, the battery to be transported should also be limited to the second desired position on the bearing plate 111. In this way, the position of the battery on the bearing plate will be limited during the transfer so as to prevent the battery from falling off and the battery can be positioned accurately during the battery swap, so that the battery loading and unloading is accelerated and more efficient.

To facilitate battery conveying, the battery conveying mechanism 114 may be configured to comprise at least three groups of conveying rollers 114a, 114b and 114c, which are respectively arranged on two sides and in the middle of the bearing plate 111 so as to achieve a uniform and stable battery conveying process. Optionally, two sides of the bearing plate 111 are respectively provided with a battery guiding mechanism 119, such as a guide roller 119a. The guide roller 119a is used for limiting a partial moving boundary and a moving direction of the battery to be transported. Under the action of the guide rollers 119a, the moving spaces of the battery to be transported in the directions of the two sides of the bearing plate are both limited. In addition, the guide rollers 119a will not cause excessive resistance to the movement of the battery to be transported in the desired direction while limiting the movement direction, so as to optimize the process in which the battery to be transported enters or leaves the bearing plate.

In addition, in order to enable the battery swap transporter to have a stable docking and positioning state in a standby area, a positioning end plate 118 may further extend beyond both sides of the front portion of the bearing portion 110, and the positioning end plate 118 is provided with a positioning hole 118a. When the battery swap transporter is in a standby state, a positioning pin on a docking device in the standby area may be inserted into the positioning hole 118a in the positioning end plate 118, so that the battery swap transporter stably stops in the standby area. The positioning method is simple in structure and high in reliability.

In addition, in order to improve the reliability of the battery swap transporter during the transfer, several additional braking functions are further provided, as will be described below one by one.

For example, the moving portion 120 further comprises a brake element that is controlled to limit the movement of the moving portion 120. Specifically, brake-equipped casters 121 may be used such that when the battery swap transporter is not needed or when an emergency occurs during the transfer, the battery swap transporter can be braked in time, thereby improving the safety and reliability of application of the device. Furthermore, a braking floor lock 130 may be additionally provided at the underside of the bottom plate 112, and the braking floor lock 130 is controlled to limit the movement of the battery swap transporter 100, and can be fixed to the ground when the battery swap transporter stops so as to provide a more reliable braking effect.

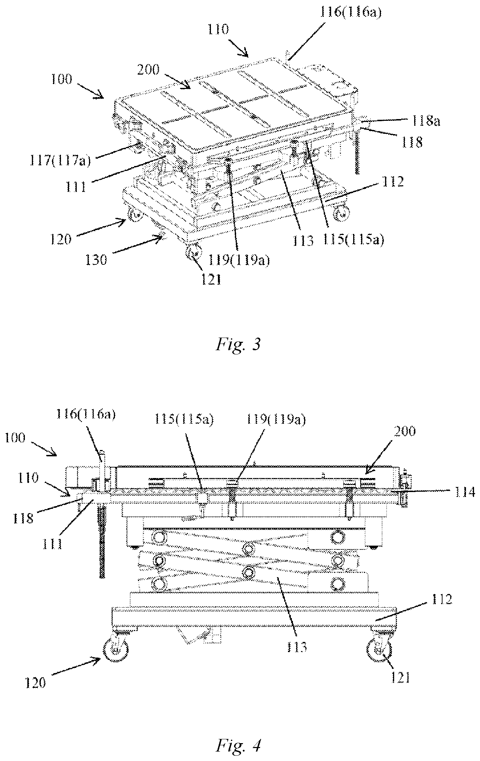

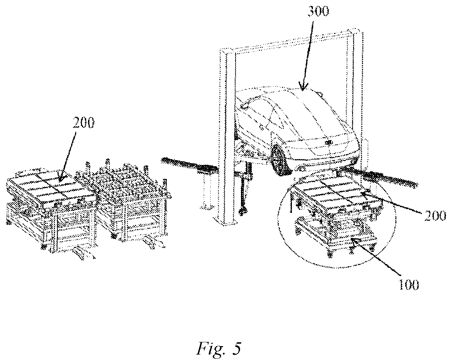

Subsequently, the working principle of the battery swap transporter 100 in the foregoing concept during a battery swap of an electric vehicle 300 will be described with reference to Figs. 3 to 5.

During the battery replacement for an electric vehicle, a battery unloading process and a battery loading process need to be respectively completed. When the battery is unloaded, the battery swap transporter 100 can be manually pushed to the bottom of the vehicle body of the electric vehicle 300, and the vehicle body positioning pins 116a are aligned to and inserted into the corresponding pin holes in the bottom of the vehicle body; the elevation mechanism 113 ascends until the conveying rollers 114a, 114b and 114c come into contact with the bottom of the battery, and supports the weight of the battery; subsequently, the battery positioning pins 115a are aligned to and inserted into the corresponding pin holes in the battery; next, the brake-equipped casters 121 and the braking floor lock 130 are maintained in a braked state, the bolts of the battery are unlocked with a torque gun, and the torque gun is withdrawn after all the bolts on the battery are removed; and then the elevation mechanism 113 descends until the battery 200 to be swapped descends with the bearing portion 110 until it is detached from the bottom of the electric vehicle 300. At this point, the battery unloading step is completed.

Subsequently, the braked state of the brake-equipped casters 121 and the braking floor lock 130 is released, the battery swap transporter 100 is pushed to the battery storage point and completes docking, and then the vehicle body positioning pins 116a are pulled down to push the battery into the storage point in a direction of the vehicle body positioning pins 116a. At this point, the step of transferring the battery 200 to be swapped is competed.

Thereafter, a new battery is conveyed to the battery swap transporter 100 in an opposite direction in the same manner and is transferred back to the vehicle 300 with a battery to be swapped, so as to start the battery loading process.

The battery swap transporter 100 that transports a new battery is pushed to the bottom of the vehicle body of the electric vehicle 300, and the vehicle body positioning pins 116a are aligned to and inserted into the corresponding pin holes in the bottom of the vehicle body; the elevation mechanism 113 ascends until the upper surface of the battery comes into contact with the bottom of the vehicle body; in this process, the chain-suspended floating element 117a will correct slight deviations; next, the brake-equipped casters 121 and the braking floor lock 130 are maintained in the braked state, the bolts of the battery are locked with the torque gun, and the torque gun is withdrawn after all the bolts on the battery are mounted; and then the elevation mechanism 113 ascends, and the conveying rollers 114a, 114b and 114c ascends therewith until they are detached from the bottom of the battery. At this point, the battery unloading step is completed.

Subsequently, the braked state of the brake-equipped casters 121 and the braking floor lock 130 is released, and the battery swap transporter 100 is driven away. At this point, the step of loading a new battery is completed. Therefore, the entire battery swap process is completed.

The battery swap transporter is mainly illustrated in the foregoing examples. Although only some embodiments of the invention are described, it will be appreciated by those skilled in the art that the invention may be embodied in many other forms. Accordingly, the examples and embodiments are to be considered as illustrative and not restrictive, and the invention is intended to cover various modifications and alterations without departing from the scope of the invention as defined by the appended claims.

## Claims

1. A battery swap transporter (100), comprising:
a bearing portion (110), comprising: a bearing plate (111) used for bearing a battery to be transported, with a battery conveying mechanism (114) being provided on the bearing plate (111); and an elevation mechanism (113), which is supported at the bottom of the bearing plate (111) and is controlled to ascend or descend to change a vertical distance between the bearing plate (111) and a bottom plate (112);
a moving portion (120), which is connected to the bottom of the bearing portion (110) and is used for driving the bearing portion (110) to move; and
a vehicle body positioning mechanism (116) arranged on the bearing plate (111), wherein the vehicle body positioning mechanism (116) is used for limiting the bearing plate (111) to a first desired position fitted to a bottom positioning hole of a vehicle with a battery to be swapped;
**characterized in that** the battery swap transporter further comprises a floating mechanism (117) arranged between the bearing plate (111) and the elevation mechanism (113) in an elevation direction, wherein the bottom of the floating mechanism (117) is connected to the elevation mechanism (113); and the floating mechanism (117) is used to enable the bearing plate (111) to shift relative to the elevation mechanism (113) in a horizontal direction and/or in a vertical direction, wherein the floating mechanism (117) is a chain-suspended floating element, and wherein the chain-suspended floating element comprises a chain that enables the bearing plate (111) to shift relative to the elevation mechanism (113) in a horizontal direction, and a spring that enables the bearing plate (111) to shift relative to the elevation mechanism (113) in a vertical direction.

2. The battery swap transporter (100) according to claim 1, **characterized in that** the vehicle body positioning mechanism (116) is longitudinally arranged at an end of the bearing plate (111), and the vehicle body positioning mechanism (116) has a working state and an avoidance state; in the working state, the vehicle body positioning mechanism (116) can be used for limiting the position between the bearing plate (111) and the vehicle with a battery to be swapped; and in the avoidance state, the battery to be transported leaves or enters the bearing plate (111) along the end of the bearing plate (111).

3. The battery swap transporter (100) according to any one of claims 1 or 2, **characterized in that** a battery positioning mechanism (115) is provided on the bearing plate (111), and the battery positioning mechanism (115) is used for limiting the bearing plate (111) to a second desired position for locking or unlocking the battery to be transported.

4. The battery swap transporter (100) according to any one of claims 1 or 2, **characterized in that** the battery conveying mechanism (114) comprises conveying rollers (114a) arranged on two sides and/or in the middle of the bearing plate (111).

5. The battery swap transporter (100) according to any one of claims 1 or 2, **characterized by** further comprising battery guiding mechanisms respectively provided on two sides of the bearing plate (111), wherein the battery guiding mechanisms are used for limiting a partial moving boundary and a moving direction of the battery to be transported.

6. The battery swap transporter (100) according to claim 5, **characterized in that** the battery guiding mechanism comprises a guide roller.

7. The battery swap transporter (100) according to any one of claims 1 or 2, **characterized in that** the moving portion (120) further comprises a brake element, which is controlled to limit the movement of the moving portion (120).

8. The battery swap transporter (100) according to any one of claims 1 or 2, **characterized by** further comprising a braking floor lock (130), which is arranged at the underside of the bottom plate (112) and is controlled to limit the movement of the battery swap transporter (100).

9. The battery swap transporter (100) according to any one of claims 1 or 2, **characterized by** further comprising a positioning end plate (118) longitudinally arranged at the end of the bearing plate (111), wherein the positioning end plate (118) is arranged at the same end of the bearing plate (111) as the vehicle body positioning mechanism (116), and extends beyond both sides of the end of the bearing portion (110), and the positioning end plate (118) is provided with a positioning hole.

## Patentansprüche

1. Batteriewechseltransportvorrichtung (100), umfassend:
einen Lagerabschnitt (110), umfassend: eine Lagerplatte (111), die zum Lagern einer zu transportierenden Batterie verwendet wird, wobei ein Batteriefördermechanismus (114) auf der Lagerplatte (111) vorgesehen ist; und einen Hubmechanismus (113), der an der Unterseite der Lagerplatte (111) gelagert ist und zur Anhebung oder Absenkung zum Verändern eines vertikalen Abstands zwischen der Lagerplatte (111) und einer Bodenplatte (112) gesteuert wird;
einen Bewegungsabschnitt (120), der an einem Boden des Lagerabschnitts (110) angeordnet ist und zum Steuern der Bewegung des Lagerabschnitts (110) verwendet wird; und
einen an der Lagerplatte (111) angeordneten Karosseriepositionierungsmechanismus (116), wobei der Karosseriepositionierungsmechanismus (116) zum Begrenzen der Lagerplatte (111) auf eine erste gewünschte Position verwendet wird, die an ein unteres Positionierungsloch eines Fahrzeugs mit einer zu wechselnden Batterie angepasst ist;
**dadurch gekennzeichnet, dass**
die Batteriewechselvorrichtung ferner einen frei beweglichen Mechanismus (117) umfasst, der zwischen der Lagerplatte (111) und dem Hubmechanismus (113) in einer Hubrichtung angeordnet ist, wobei der Boden des frei beweglichen Mechanismus (117) mit dem Hubmechanismus (113) verbunden ist; und der frei bewegliche Mechanismus (117) dazu verwendet wird, die Lagerplatte (111) in die Lage zu versetzen, sich relativ zu dem Hubmechanismus (113) in einer horizontalen Richtung und/oder in einer vertikalen Richtung zu verschieben, wobei der frei bewegliche Mechanismus (117) ein kettenaufgehängtes frei bewegliches Element ist und wobei das kettenaufgehängte frei bewegliche Element eine Kette umfasst, die die Lagerplatte (111) in die Lage versetzt, sich relativ zu dem Hubmechanismus (113) in einer horizontalen Richtung zu verschieben, und eine Feder, die die Lagerplatte (111) in die Lage versetzt, sich relativ zu dem Hubmechanismus (113) in einer vertikalen Richtung zu verschieben.

2. Batteriewechseltransportvorrichtung (100) nach Anspruch 1, **dadurch gekennzeichnet, dass** der Karosseriepositionierungsmechanismus (116) in Längsrichtung an einem Ende der Lagerplatte (111) angeordnet ist, und der Karosseriepositionierungsmechanismus (116) einen Arbeitszustand und einen Vermeidungszustand aufweist; im Arbeitszustand der Karosseriepositionierungsmechanismus (116) zur Positionsbegrenzung zwischen der Lagerplatte (111) und dem Fahrzeug mit einer zu wechselnden Batterie verwendet werden kann; und im Vermeidungszustand die zu transportierende Batterie entlang des Endes der Lagerplatte (111) die Lagerplatte (111) verlässt oder in diese eintritt.

3. Batteriewechseltransportvorrichtung (100) nach einem der Ansprüche 1 oder 2, **dadurch gekennzeichnet, dass** ein Batteriepositionierungsmechanismus (115) an der Lagerplatte (111) vorgesehen ist, und der Batteriepositionierungsmechanismus (115) zum Begrenzen der Lagerplatte (111) auf eine zweite gewünschte Position zum Verriegeln oder Entriegeln der zu transportierenden Batterie verwendet wird.

4. Batteriewechseltransportvorrichtung (100) nach einem der Ansprüche 1 oder 2, **dadurch gekennzeichnet, dass** der Batteriefördermechanismus (114) Förderrollen (114a) umfasst, die an zwei Seiten und/oder in der Mitte der Lagerplatte (111) angeordnet sind.

5. Batteriewechseltransportvorrichtung (100) nach einem der Ansprüche 1 oder 2, **dadurch gekennzeichnet, dass** diese ferner Batterieführungsmechanismen umfasst, die jeweils auf zwei Seiten der Lagerplatte (111) vorgesehen sind, wobei die Batterieführungsmechanismen zur Begrenzung einer teilweisen Bewegungsgrenze und einer Bewegungsrichtung der zu transportierenden Batterie verwendet werden.

6. Batteriewechseltransportvorrichtung (100) nach Anspruch 5, **dadurch gekennzeichnet, dass** der Batterieführungsmechanismus eine Führungsrolle umfasst.

7. Batteriewechseltransportvorrichtung (100) nach einem der Ansprüche 1 oder 2, **dadurch gekennzeichnet, dass** der bewegliche Abschnitt (120) ferner ein Bremselement umfasst, das zum Begrenzen der Bewegung des beweglichen Abschnitts (120) gesteuert wird.

8. Batteriewechseltransportvorrichtung (100) nach einem der Ansprüche 1 oder 2, **dadurch gekennzeichnet, dass** sie ferner eine bremsende Bodenverriegelung (130) umfasst, die an der Unterseite der Bodenplatte (112) angeordnet ist und zum Begrenzen der Bewegung der Batteriewechseltransportvorrichtung (100) gesteuert wird.

9. Batteriewechseltransportvorrichtung (100) nach einem der Ansprüche 1 oder 2, **dadurch gekennzeichnet, dass** sie ferner eine Positionierungsendplatte (118) umfasst, die in Längsrichtung am Ende der Lagerplatte (111) angeordnet ist, wobei die Positionierungsendplatte (118) am selben Ende der Lagerplatte (111) wie der Karosseriepositionierungsmechanismus (116) angeordnet ist und sich über beide Seiten des Endes des Lagerabschnitts (110) hinaus erstreckt, und die Positionierungsendplatte (118) mit einem Positionierungsloch versehen ist.

## Revendications

1. Dispositif de transport de remplacement de batterie (100), comprenant :
une partie de support (110) comprenant : une plaque de support (111) utilisée pour supporter une batterie à transporter, avec un mécanisme d'acheminement de batterie (114) étant prévu sur la plaque de support (111) ; et un mécanisme d'élévation(113), qui est supporté au niveau du dessous de la plaque de support (111) et est contrôlé pour monter ou descendre afin de modifier une distance verticale entre la plaque de support (111) et une plaque de dessous (112) ;
une partie mobile (120), laquelle est raccordée au dessous de la partie de support (110) et est utilisée pour amener la portion de support (110) à se déplacer ; et
un mécanisme de positionnement de carrosserie de véhicule (116) agencé sur la plaque de support (111), dans lequel le mécanisme de positionnement de carrosserie de véhicule (116) est utilisé pour limiter la plaque de support (111) à une première position souhaitée ajustée à un trou de positionnement de dessous d'un véhicule avec une batterie à remplacer ;
**caractérisé en ce que**
le dispositif de transport de remplacement de batterie comprend en outre un mécanisme flottant (117) agencé entre la plaque de support (111) et le mécanisme d'élévation (113) dans une direction d'élévation, dans lequel le côté inférieur du mécanisme flottant (117) est raccordé au mécanisme d'élévation (113) ; et le mécanisme flottant (117) est utilisé pour permettre à la plaque de support (111) de se déplacer par rapport au mécanisme d'élévation (113) dans une direction horizontale et/ou dans une direction verticale, dans lequel le mécanisme flottant (117) est un élément flottant suspendu par chaîne, et dans lequel l'élément flottant suspendu par chaîne comprend une chaîne qui permet à la plaque de support (111) de se déplacer par rapport au mécanisme d'élévation (113) dans une direction horizontale, et un ressort qui permet à la plaque de support (111) de se déplacer par rapport au mécanisme d'élévation (113) dans une direction verticale.

2. Dispositif de transport de remplacement de batterie (100) selon la revendication 1, **caractérisé en ce que** le mécanisme de positionnement de carrosserie de véhicule (116) est agencé longitudinalement au niveau d'une extrémité de la plaque de support (111), et le mécanisme de positionnement de carrosserie de véhicule (116) a un état de fonctionnement et un état d'évitement ; dans l'état de fonctionnement, le mécanisme de positionnement de carrosserie de véhicule (116) peut être utilisé pour limiter la position entre la plaque de support (111) et le véhicule avec une batterie à remplacer ; et dans l'état d'évitement, la batterie à transporter quitte ou entre la plaque de support (111) le long de l'extrémité de la plaque de support (111).

3. Dispositif de transport de remplacement de batterie (100) selon l'une quelconque des revendications 1 ou 2, **caractérisé en ce qu'**un mécanisme de positionnement de batterie (115) est prévu sur la plaque de support (111), et le mécanisme de positionnement de batterie (115) est utilisé pour limiter la plaque de support (111) à une deuxième position souhaitée pour verrouiller ou déverrouiller la batterie à transporter.

4. Dispositif de transport de remplacement de batterie (100) selon l'une quelconque des revendications 1 ou 2, **caractérisé en ce que** le mécanisme de transport de batterie (114) comprend des rouleaux d'acheminement (114a) agencés sur deux côtés et/ou au milieu de la plaque de support (111).

5. Dispositif de transport de remplacement de batterie (100) selon l'une quelconque des revendications 1 ou 2, **caractérisé en ce qu'**il comprend en outre des mécanismes de guidage de batterie prévus respectivement sur deux côtés de la plaque de support (111), dans lequel les mécanismes de guidage de batterie sont utilisés pour limiter une limite de déplacement partielle et une direction de déplacement de la batterie à transporter.

6. Dispositif de transport de remplacement de batterie (100) selon la revendication 5, **caractérisé en ce que** le mécanisme de guidage de batterie comprend un rouleau de guidage.

7. Dispositif de transport de remplacement de batterie (100) selon l'une quelconque des revendications 1 ou 2, **caractérisé en ce que** la partie mobile (120) comprend en outre un élément de freinage, qui est contrôlé pour limiter le déplacement de la partie mobile (120).

8. Dispositif de transport de remplacement de batterie (100) selon l'une quelconque des revendications 1 ou 2, **caractérisé en ce qu'**il comprend en outre un verrou inférieur de freinage (130), lequel est agencé au niveau de la face inférieure de la plaque de dessous (112) et est contrôlé pour limiter le déplacement du dispositif de transport de remplacement de batterie (100).

9. Dispositif de transport de remplacement de batterie (100) selon l'une quelconque des revendications 1 ou 2, **caractérisé en ce qu'**il comprend en outre une plaque d'extrémité de positionnement (118) agencée longitudinalement au niveau de l'extrémité de la plaque de support (111), dans lequel la plaque d'extrémité de positionnement (118) est agencée au niveau de la même extrémité de la plaque de support (111) que le mécanisme de positionnement de carrosserie de véhicule (116), et s'étend au-delà des deux côtés de l'extrémité de la portion de support (110), et la plaque d'extrémité de positionnement (118) est pourvue d'un trou de positionnement.
